# EUROPÄISCHE PATENTSCHRIFT

(11) **EP 1 083 795 B1**
(45) Veröffentlichungstag und Bekanntmachung des Hinweises auf die Patenterteilung: **23.09.2009**
(21) Anmeldenummer: 99926493.0
(22) Anmeldetag: 01.06.1999
(51) Int. Cl.: A01N 63/02

(54) **VERFAHREN ZUR KONTROLLE VON SCHADORGANISMEN IN KULTUREN VON BT-BAUMWOLLE**
METHOD FOR CONTROLLING PESTS IN CROP CULTURES
PROCEDE POUR CONTROLER DES ORGANISMES NUISIBLES DANS DES CULTURES DE PLANTES UTILES

(30) Priorität: 05.06.1998 DE 19825333
(43) Veröffentlichungstag der Anmeldung: 21.03.2001
(60) Teilanmeldung: 09161693.8
(73) Patentinhaber: BASF SE, 67056 Ludwigshafen (DE)
(72) Erfinder: KERN, Manfred, D-55296 Lörzweiler (DE)
(86) Internationale Anmeldenummer: PCT/EP1999/003779
(87) Internationale Veröffentlichungsnummer: WO 1999/063829

(56) Entgegenhaltungen:
- EP-A- 0 408 403
- EP-A- 0 408 403
- WO-A-97/45017
- WO-A-97/45017
- WO-A-98/57969
- WO-A-99/35910
- FR-A- 2 485 334
- FR-A- 2 485 334
- GB-A- 1 372 957
- HUSSEIN N M ET AL: "JOINT ACTION OF CERTAIN INSECTICIDES BACILLUS-THURINGIENSIS AND THEIR MIXTURES ON THE PINK BOLLWORM INFESTATION IN COTTON PLANTATION OF EGYPT" MEDEDELINGEN VAN DE FACULTEIT LANDBOUWWETENSCHAPPEN RIJKSUNIVERSITEIT, Bd. 55, Nr. 2 PART A, 1990, Seiten 307-312, XP002213160 1990 ISSN: 0368-9697
- DATABASE CROPU [Online] 1998 BACHELER J S ET AL: "Efficacy of selected insecticides against bollworms on BT cotton, 1997." retrieved from STN Database accession no. 1998-88032 XP002213219 & ARTHROPOD MANAGE.TESTS (23, 215, 1998) ,
- DATABASE CROPU [Online] 1997 FIFE J H ET AL: "Efficacy of selected insecticides against cotton aphids on BT cotton, 1996." retrieved from STN Database accession no. 97-89879 XP002117929 & ARTHROPOD MANAGE.TESTS (22, 251-52, 1997) ,
- DATABASE CA [Online] CHEMICAL ABSTRACTS SERVICE, COLUMBUS, OHIO, US; HARRIS, J. G. ET AL: "The usage of Karate (.LAMBDA.-Cyhalothrin) oversprays in combination with refugia, as a viable and sustainable resistance management strategy for B.T. cotton" retrieved from STN Database accession no. 129:199294 CA XP002213220 & PROCEEDINGS - BELTWIDE COTTON CONFERENCES (1998), (VOL. 2), 1217-1220 , 1998,
- DATABASE CA [Online] CHEMICAL ABSTRACTS SERVICE, COLUMBUS, OHIO, US; HOPKINS, J. A. ET AL: "Selection of supplemental insecticides for pest control in BT cotton and non-BT cotton" retrieved from STN Database accession no. 129:199293 CA XP002213221 & PROCEEDINGS - BELTWIDE COTTON CONFERENCES (1998), (VOL. 2), 1213-1217 , 1998,
- DATABASE CROPU [Online] 1997 BURRIS E ET AL: "A threshold management test with NuCOTN 33B, 1996." retrieved from STN Database accession no. 97-89870 XP002117928 & ARTHROPOD MANAGE.TESTS (22, 242, 1997) 1 TAB.,
- DATABASE CROPU [Online] 1996 BURRIS G ET AL: "Evaluations of square damage on Bollguard (Bt) cotton, 1995." retrieved from STN Database accession no. 96-89639 XP002117935 & ARTHROPOD MANAGE.TESTS (21, 422-23, 1996) 1 TAB., Univ.Louisiana-State
- CHEMICAL ABSTRACTS, vol. 127, no. 8, 25. August 1997 (1997-08-25) Columbus, Ohio, US; abstract no. 105596, PARKER, ROY D. ET AL: "Evaluation of insecticides for boll weevil control and impact on non-target arthropods on non- transgenic and transgenic B.t. cotton cultivars" XP002132931 & PROC. - BELTWIDE COTTON CONF. (1997), (VOL. 2), 1216-1221, 1997,
- DATABASE BIOSIS [Online] BIOSCIENCES INFORMATION SERVICE, PHILADELPHIA, PA, US; 1995 BUTTER N S ET AL: "Integrated use of Bacillus thuringiensis Berliner with some insecticides for the management of bollworms on cotton." Database accession no. PREV199698822434 XP002213222 & JOURNAL OF ENTOMOLOGICAL RESEARCH (NEW DELHI), Bd. 19, Nr. 3, 1995, Seiten 255-263, ISSN: 0378-9519
- DATABASE BIOSIS [Online] BIOSCIENCES INFORMATION SERVICE, PHILADELPHIA, PA, US; 1993 SHARMA P D: "Relative efficacy of different insecticides for the control of cotton bollworms." Database accession no. PREV199497282070 XP002213223 & JOURNAL OF INSECT SCIENCE, Bd. 6, Nr. 1, 1993, Seiten 152-153, ISSN: 0970-3837
- DATABASE CABA [Online] 1991 HUSSEIN, N. M. ET AL: "Joint action of certain insecticides, Bacillus thuringiensis and their mixtures on the pink bollworm infestation in cotton plantation in Egypt" retrieved from STN Database accession no. 141553 XP002117813 & MEDEDELINGEN VAN DE FACULTEIT LANDBOUWWETENSCHAPPEN, RIJKSUNIVERSITEIT GENT, (1990) VOL. 55, NO. 2A, PP. 307-312. 5 REF. ISSN: 0368-9697, Plant Protection Research Institute, Agricultural Research Center, Ministry of Agriculture, Cairo, Egypt.
- DATABASE CROPU [Online] 1997 BURRIS E ET AL: "A threshold management test with NuCOTN 33B, 1996." retrieved from STN Database accession no. 97-89870 XP002117928 & ARTHROPOD MANAGE.TESTS (22, 242, 1997) 1 TAB., Univ.Louisiana-State
- DATABASE CROPU [Online] 1996 BURRIS G ET AL: "Evaluations of square damage on Bollguard (Bt) cotton, 1995." retrieved from STN Database accession no. 96-89639 XP002117935 & ARTHROPOD MANAGE.TESTS (21, 422-23, 1996) 1 TAB., Univ.Louisiana-State
- DATABASE CROPU [Online] 1997 FIFE J H ET AL: "Efficacy of selected insecticides against cotton aphids on BT cotton, 1996." retrieved from STN Database accession no. 97-89879 XP002117929 & ARTHROPOD MANAGE.TESTS (22, 251-52, 1997) 3 TAB., Univ.Louisiana-State
- DATABASE CROPU [Online] 1993 JOHNSON D R ET AL: "Control of Bollworm on Cotton Using BT combinations, 1991." retrieved from STN Database accession no. 93-86094 XP002117936 & INSECTIC.ACARIC.TESTS (18, 235-36, 1993) 1 TAB.,
- CHEMICAL ABSTRACTS, vol. 99, no. 11, 12. September 1983 (1983-09-12) Columbus, Ohio, US; abstract no. 83681, CAUQUIL, J. ET AL: "New contribution to the chemical control of Aphis gossypii Glover, major cotton pest in the Central African Republic" XP002117926 & COTON FIBRES TROP. (FR. ED.) (1982), 37(4), 333-50,1982,
- CHEMICAL ABSTRACTS, vol. 110, no. 21, 22. Mai 1989 (1989-05-22) Columbus, Ohio, US; abstract no. 187779, EL-KADY, E. A. ET AL: "Comparative potency of certain insecticides against aphids" XP002117927 & MEDED. FAC. LANDBOUWWET., RIJKSUNIV. GENT (1988), 53(2B), 741-4,1988,
- CHEMICAL ABSTRACTS, vol. 127, no. 8, 25. August 1997 (1997-08-25) Columbus, Ohio, US; abstract no. 105596, PARKER, ROY D. ET AL: "Evaluation of insecticides for boll weevil control and impact on non-target arthropods on non- transgenic and transgenic B.t. cotton cultivars" XP002132931 & PROC. - BELTWIDE COTTON CONF. (1997), (VOL. 2), 1216-1221 ,1997,
- HAMON N ET AL: "WORLDWIDE DEVELOPMENT OF FIPRONIL INSECTICIDE" PROCEEDINGS. BELTWIDE COTTON CONFERENCE,XX,XX, Bd. 2, 1. Januar 1996 (1996-01-01), Seiten 759-765, XP000602846

## Beschreibung

Die Erfindung betrifft ein Verfahren zur Bekämpfung von Schadorganismen in Kulturen von Bt-Baumwolle.

Genetisch veränderte Baumwollpflanzen, die Toxine aus Bacillus thuringiensis (Bt) exprimieren und dadurch eine Resistenz gegen Befall durch bestimmte Schadinsekten aufweisen, sind bekannt und werden in steigendem Maße im kommerziellen Pflanzenbau eingesetzt (siehe z.B. US-A 5,322,938).
Obwohl solche gentechnisch veränderte Baumwolle bereits sehr gute Eigenschaften aufweist, besteht doch noch eine Reihe von Problemen, so daß weiterhin ein breiter Raum für Verbesserungen bleibt.

Beispielsweise sind Bt-Toxine nicht gegen alle wichtigen Baumwollschädlinge wirksam (siehe z.B. Flint, H.M. et al. (1995) Southwestern Entomologist 20/3, 281-292), der Wirkungsgrad ist bei hohem Befallsdruck ungenügend (siehe z.B. EPA Hearing Docket OPP-0478 (1997) Plant Pesticides Resistance Management, The Agriculture Program, The Texas A&M University System, College Station, Texas 77843), es können Bt-Resistenzen oder Bt-Kreuzresistenzen auftreten (siehe z.B. Gould, F. et al. (1997) Proc. Natl. Acad. Sci. USA 94, 3519-3523 bzw. Bauer, L.S. (1995) Florida Entomologist 78/3, 414) oder die insektizide Wirksamkeit einzelner Pflanzenteile kann deutlich Unterschiede aufweisen (siehe z.B. Lozzia, G.C. und Rigamonti, I.E. (1996) Boll. Zool. agr. Buchic Ser II, 28/1, 51-69).

Aufgabe war es daher weiterhin, möglichst wirksame und umweltverträgliche Problemlösungen zur Bekämpfung von Baumwollschädlingen bereitzustellen.

In der WO-A 97/45 017 ist ein Verfahren zur Bekämpfung von Lepidopteren in Bt-Baumwolle beschrieben, wobei zusätzlich ein insektizid wirksames Benzoylharnstoff-Derivat angewendet wird. Aussagen über die Wirksamkeit anderer Insektizidklassen lassen sich daraus nicht ableiten.

DATABASE CROPU [Online] 1997, BURRIS et al.: "A threshold management test with NuCOTN 33B, 1997." XP002117928 und DATABASE CROPU [Online] 1997, BURRIS et al.: "Evalutions of square damage on Bollguard (Bt) cotton, 1995." XP002117935 nennen im Zusammenhang mit Bt-Baumwollpflanzen folgende Aktivsubstanz-Dosierungen für die hierin genannten Organophosphorverbindungen (Umrechnungsfaktor: 1 lb a.i./A = 1120g Aktivsubstanz/ha): Parathion-methyl, Acephate-jeweils 0.33 lb a.i./A (= 370 g Aktivsubstanz/ha); Profenofos 1.0 lb a.i./A (= 1120 g Aktivsubstanz/ha).

DATABASE CROPU [Online] 1997, FIFE et al.: "Efficacy of selected insecticides against cotton aphids on BT cotteon, 1996." XP002117929 nennt im Zusammenhang mit Bt-Baumwollpflanzen die folgenden Aktivsubstanz-Dosierungen für die hierin genannten Organophosphorverbindungen: Chlorpyrifos 0.75 lb a.i./A (= 840 g Aktivsubstanz/ha); Methamidosphos 0.3 lb a.i./A (=336 g Aktivsubstanz/ha).

Es wurde nun überraschend gefunden, daß bestimmte Klassen von Insektiziden bei Verwendung in Kombination mit Bt-Baumwolle synergistische Effekte aufweisen.

Gegenstand der Erfindung ist daher ein Verfahren zur Bekämpfung von Schadorganismen in gentechnisch veränderten Baumwollpflanzen, die ein aus Bacillus thuringiensis abgeleitetes Gen enthalten, welches für ein insektizid wirksames Protein codiert und dieses exprimiert, dadurch gekennzeichnet, daß man eine insektizid wirksame Menge in einer Aufwandmenge von 0,001 bis 0,3 kg/ha von einer oder mehreren Verbindungen aus der folgenden Gruppe a) auf die Pflanzen, deren Saat- oder Vermehrungsgut und/oder deren Anbaufläche aufbringt:
a) Organophosphorverbindungen:
   Triazophos (726), Monocrotophos (502), Methamidophos (479), Chlorpyrifos (137), Parathion (551), Acephate (4), Profenofos (594), Malathion (448), Heptenophos (395).

Die eingeklammerten Zahlen geben die Eintragungsnummer in The Pesticide Manual, 11. Auflage, British Crop Protection Council, Farnham 1997, wieder.

Das erfindungsgemäße Verfahren ermöglicht eine reduzierte Aufwandmenge an Pflanzenschutzmitteln, die synergistisch mit den transgenen Pflanzen wirken, sowie eine Erhöhung und Verbreiterung des Wirkungsgrades der transgenen Pflanzen und bietet somit ökonomische wie ökologische Vorteile.

Die Vorteile des Verfahrens liegen einerseits in Synergismen mit den in der transgenen Pflanze produzierten Bacillus thuringiensis Toxinen (Bt-Toxinen) sowie andererseits in einer z.B. verminderten Anzahl von Applikationen oder einer Reduzierung der Aufwandmengen auf zum Teil subletale Dosierungen (im Vergleich zur konventionellen Anwendung der einzelnen Insektizide) und einer damit verbundenen deutlich reduzierten Umweltbelastung.

Insbesondere Kombinationen der genannten Wirkstoffe zeigen zusammen mit den endogenen, d.h. innerhalb der transgenen Pflanzen, produzierten Bt-Toxinen einen ausgeprägte synergistische Wirkung auf eine Vielzahl von zu bekämpfenden Schadorganismen.

Ebenso Gegenstand der Erfindung ist die Verwendung von Verbindungen aus der o.g. Gruppe a)
a) Organophosphorverbindungen:
   Triazophos (726), Monocrotophos (502), Malathion (448)

zur Bekämpfung von Schadorganismen in gentechnisch veränderten Baumwollpflanzen, die ein aus Bacillus thuringiensis abgeleitetes Gen enthalten, welches für ein insektizid wirksames Protein kodiert und dieses exprimiert.

Der Begriff "insektizid wirksam" umfaßt im Sinne der Erfindung insektizide, nematizide, ovizide Wirkung, sowie eine abschreckende (repellant), verhaltensändemde (behavior modifier) und sterilisierende (sterilant) Wirkung.

Besonders bevorzugt ist Triazophos.

Die erfindungsgemäß eingesetzten insektizid wirksamen Verbindungen sind bekannt und kommerziell erhältlich.

Die Verbindungen sind weiterhin ausführlich beschrieben in The Pesticide Manual, 11. Aufl., British Crop Protection Council, Farmham 1997. Dort finden sich auch Hinweise zur Herstellung.

Die erfindungsgemäß verwendeten Insektizide sind üblicherweise als kommerzielle Formulierungen erhältlich. Sie können aber gegebenenfalls auf verschiedene Art formuliert werden, je nachdem wie es durch die biologischen und/oder chemischphysikalischen Parameter vorgegeben ist. Als Formulierungsmöglichkeiten kommen beispielsweise in Frage:

Spritzpulver (WP), emulgierbare Konzentrate (EC), wäßrige Lösungen (SL), Emulsionen, versprühbare Lösungen, Dispersionen auf Öl- oder Wasserbasis (SC), Suspoemulsionen (SE), Stäubemittel (DP), Beizmittel, Granulate in Form von Mikro-, Sprüh-, Aufzugs- und Adsorptionsgranulaten, wasserdispergierbare Granulate (WG), ULV-Formulierungen, Mikrokapseln, Wachse oder Köder.

Diese einzelnen Formulierungstypen sind im Prinzip bekannt und beispielsweise beschrieben in:
Winnacker-Küchler, "Chemische Technologie", Band 7, C. Hauser Verlag München, 4. Aufl. 1986; van Falkenberg, "Pesticides Formulations", Marcel Dekker N.Y., 2nd Ed. 1972-73; K. Martens, "Spray Drying Handbook", 3rd Ed. 1979, G. Goodwin Ltd. London.

Die notwendigen Formulierungshilfsmittel, wie Inertmaterialien, Tenside, Lösungsmittel und weitere Zusatzstoffe, sind ebenfalls bekannt und beispielsweise beschrieben in:
Watkins, "Handbook of Insecticide Dust Diluents and Garriers", 2nd Ed., Darland Books, Caldwell N.J.; H. v. Olphen, "Introduction to Clay Colloid Chemistry", 2nd Ed., J. Wiley & Sons, N.Y.; Marsden, "Solvents Guide", 2nd Ed., Interscience, N.Y. 1950; McCutcheon's, "Detergents and Emulsifiers Annual", MC Publ. Corp., Ridgewood N.J.; Sisley and Wood, "Encyclopedia of Surface Active Agents", Chem. Publ. Co. Inc., N.Y. 1964; Schönfeldt, "Grenzflächenaktive Äthylenoxidaddukte", Wiss. Verlagsgesell., Stuttgart 1967; Winnacker-Küchler, "Chemische Technologie", Band 7, C. Hauser Verlag München, 4. Aufl. 1986.

Auf der Basis dieser Formulierungen lassen sich auch Kombinationen mit anderen pestizid wirksamen Stoffen, Düngemitteln und/oder Wachstumsregulatoren herstellen, z.B. in Form einer Fertigformulierung oder als Tankmix. Spritzpulver sind in Wasser gleichmäßig dispergierbare Präparate, die neben dem Wirkstoff außer einem Verdünnungs- oder Inertstoff noch Netzmittel, z.B. polyoxethylierte Alkylphenole, polyoxethylierte Fettalkohole, Alkyl- oder Alkylphenol-sulfonate und Dispergiermittel, z.B. ligninsulfonsaures Natrium, 2,2'-dinaphthylmethan-6,6'-disulfonsaures Natrium enthalten.
Emulgierbare Konzentrate werden durch Auflösen des Wirkstoffes in einem organischen Lösungsmittel, z.B. Butanol, Cyclohexanon, Dimethylformamid, Xylol oder auch höhersiedenden Aromaten oder Kohlenwasserstoffen unter Zusatz von einem oder mehreren Emulgatoren hergestellt. Als Emulgatoren können beispielsweise verwendet werden: Alkylarylsulfonsaure Calcium-Salze wie Cadodecylbenzol-sulfonat oder nichtionische Emulgatoren wie Fettsäurepolyglykolester, Alkylarylpolyglykolether, Fettalkoholpolyglykolether, Propylenoxid-Ethylenoxid-Kondensationsprodukte, Alkylpolyether, Sorbitanfettsäureester, Polyoxyethylensorbitan-Fettsäureester oder Polyoxethylensorbitester.

Stäubemittel erhält man durch Vermahlen des Wirkstoffes mit fein verteilten festen Stoffen, z.B. Talkum, natürlichen Tonen wie Kaolin, Bentonit, Pyrophillit oder Diatomeenerde. Granulate können entweder durch Verdüsen des Wirkstoffes auf adsorptionsfähiges, granuliertes Inertmaterial hergestellt werden oder durch Aufbringen von Wirkstoffkonzentraten mittels Klebemitteln, z. B. Polyvinylalkohol, polyacrylsaurem Natrium oder auch Mineralölen, auf die Oberfläche von Trägerstoffen wie Sand, Kaolinite oder von granuliertem Inertmaterial. Auch können geeignete Wirkstoffe in der für die Herstellung von Düngemittelgranulaten üblichen Weise - gewünschtenfalls in Mischung mit Düngemitteln - granuliert werden.

In Spritzpulvern beträgt die Wirkstoffkonzentration z.B. etwa 10 bis 90 Gew.-% der Rest zu 100 Gew.-% besteht aus üblichen Formuüerungsbestandteilen. Bei emulgierbaren Konzentraten kann die Wirkstoffkonzentration etwa 5 bis 80 Gew.-% betragen. Staubförmige Formulierungen enthalten meistens 5 bis 20 Gew.-% an Wirkstoff, versprühbare Lösungen etwa 2 bis 20 Gew.-%. Bei Granulaten hängt der Wirkstoffgehalt zum Teil davon ab, ob die wirksame Verbindung flüssig oder fest vorliegt und welche Granulierhilfsmittel, Füllstoffe usw. verwendet werden.

Daneben enthalten die genannten Wirkstofformulierungen gegebenenfalls die jeweils üblichen Haft-, Netz-, Dispergier-, Emulgier-, Penetrations-, Lösungsmittel, Füll- oder Trägerstoffe.

Zur Anwendung werden die in handelsüblicher Form vorliegenden Konzentrate gegebenenfalls in üblicher Weise verdünnt, z.B. bei Spritzpulvern, emulgierbaren Konzentraten, Dispersionen und teilweise auch bei Mikrogranulaten mittels Wasser. Staubförmige und granulierte Zubereitungen sowie versprühbare Lösungen werden vor der Anwendung üblicherweise nicht mehr mit weiteren inerten Stoffen verdünnt.

Mit den äußeren Bedingungen wie Temperatur, Feuchtigkeit u.a. variiert die erforderliche Aufwandmenge.

Die erfindungsgemäßen Wirkstoffe können in ihren handelsüblichen Formulierungen sowie in den aus diesen Formulierungen bereiteten Anwendungsformen in Mischungen mit anderen Wirkstoffen, wie Insektiziden, Lockstoffen, Sterilantien, Akariziden, Nematiziden, Fungiziden, wachstumsregulierenden Stoffen oder Herbiziden vorliegen.

Bevorzugte weitere Mischungspartner sind
1, aus der Gruppe der Phosphorverbindungen
   Azamethiphos, Azinphos-ethyl-, Azinphosmethyl, Bromophos, Bromophos-ethyl, Cadusafos (F-67825), Chlorethoxyphos, Chlorfenvinphos, Chlormephos, Chlorpyrifos-methyl, Demeton, Demeton-S-methyl, Demeton-S-methylsulphon, Dialifos, Diazinon, Dichlorvos, Dicrotophos, Dimethoate, Disulfoton, EPN, Ethion, Ethoprophos, Etrimfos, Famphur, Fenamiphos, Fenitriothion, Fensulfothion, Fenthion, Fonofos, Formothion, Fosthiazate (ASC-66824), Isazophos, Isothioate, Isoxathion, Methacrifos, Methidathion, Salithion, Mevinphos, Naled, Omethoate, Oxydemeton-methyl, Phenthoate, Phorate, Phosalone, Phosfolan, Phosphocarb (BAS-301), Phosmet, Phosphamidon, Phoxim, Pirimiphos, Primiphos-ethyl, Pirimiphos-methyl, Propaphos, Proetamphos, Prothiofos, Pyraclofos, Pyridapenthion, Quinalphos, Sulprofos, Temephos, Terbufos, Tebupirimfos,Tetrachlorvinphos, Thiometon, Triazophos, Trichlorphon, Vamidothion;
2. aus der Gruppe der Carbamate
   Alanycarb (OK-135), 2-sec.-Butylphenylmethylcarbamate (BPMC), Carbosulfan, Cloethocarb, Benfuracarb, Ethiofencarb, Furathiocarb, HCN-801, Isoprocarb, Methomyl, 5-Methyl-m-cumenylbutyryl(methyl)carbamate, Oxamyl, Propoxur, Thiodicarb, Thiofanox, 1-Methylthio(ethylideneamino)-N-methyl-N-(morpholinothio)carbamate (UC 51717), Triazamate;
3. aus der Gruppe der Carbonsäureester
   Acrinathrin, Allethrin, Alphametrin, 5-Benzyl-3-furylmethyl-(E)-, (1 R)-cis-2,2-dimethyl-3-(2-oxothiolan-3-ylidenemethyl)cyclopropanecarboxylate, Beta-Cyfluthrin, Beta-Cypermethrin, Bioallethrin, Bioallethrin((S)-cyclopentylisomer), Bioresmethrin, Bifenthrin, (RS)-1-Cyano-1-(6-phenoxy-2-pyridyl)methyl-(1RS)-trans-3-(4-tert.butylphenyl)-2,2-dimethylcyclopropanecarboxylate (NCl 85193), Cycloprothrin, Cythithrin, Cyphenothrin, Empenthrin, Esfenvalerate, Fenfluthrin, Flucythrinate, Flumethrin, Fluvalinate (D-Isomer), Imiprothrin (S-41311), Permethrin, Phenothrin ((R)-Isomer), Prallethrin, Pyrethrine (natürliche Produkte), Resmethrin, Tefluthrin, Tetramethrin, Theta-Cypermethrin (TD-2344), Transfluthrin, Zeta-Cypermethrin (F-56701);
4. aus der Gruppe der Amidine
   Chlordimeform;
5. aus der Gruppe der Zinnverbindungen
   Cyhexatin;
6. Sonstige
   ABG-9008, Acetamiprid, Anagrapha falcitera, AKD-1022, AKD-3059, ANS-118, Bacillus thuringiensis, Beauveria bassianea, Bensultap, Bifenazate (D-2341), Binapacryl, BJL-932, Bromopropylate, BTG-504, BTG-505, Buprofezin, Camphechlor, Cartap, Chlorobenzilate, Chlorfluazuron, 2-(4-Chlorphenyl)-4,5-diphenylthiophen (UBI-T 930), Chlorfentezine, Chromafenozide (ANS-118), CG-216, CG-217, CG-234, A-184699, Cyclopropancarbonsäure-(2-naphthylmethyl)ester (Ro12-0470), Cyromazin, Diacloden (Thiamethoxam), N-(3,5-Dichlor-4-(1,1,2,3,3,3-hexafluor-1-propyloxy)phenyl)carbamoyl)-2-chlorbenzcarboximidsäureethylester, DDT, Dicofol, Diflubenzuron, N-(2,3-Dihydro-3-methyl-1,3-thiazol-2-ylidene)-2,4-xylidine, Dinobuton, Dinocap, Diofenolan, DPX-062, Emamectin-Benzoate (MK-244), Endosulfan, Ethiprole (Sulfethiprole), Ethofenprox, Etoxazole (YI-5301), Fenoxycarb, Fluazuron, Flumite (Flufenzine, SZI-121), 2-Fluoro-5-(4-(4-ethoxyphenyl)-4-methyl-1-pentyl)diphenylether (MTI 800), Granulose- und Kernpolyederviren, Fenpyroximate, Fenthiocarb, Flubenzimine, Flucycloxuron, Flufenoxuron, Flufenprox (ICI-A5683), Fluproxyfen, Gamma-HCH, Halofenozide (RH-0345), Halofenprox (MTI-732), Hexaflumuron (DE_473), Hexythiazox, HOI-9004, Hydramethylnon (AC 217300), Lufenuron, Indoxacarb (DPX-MP062), Kanemite (AKD-2023), M-020, MTI-446, Ivermectin, M-020, Methoxyfenozide (Intrepid, RH-2485), Milbemectin, NC-196, Neemgard, Nitenpyram (TI-304), 2-Nitromethyl-4,5-dihydro-6H-thiazin (DS 52618), 2-Nitromethyl-3,4-dihydrothiazol (SD 35651), 2-Nitromethylene-1,2-thiazinan-3-ylcarbamaldehyde (WL 108477), Pyriproxyfen (S-71639), NC-196, NC-1111, NNI-9768, Novaluron (MCW-275), OK-9701, OK-9601, OK-9602, Propargite, Pymethrozine, Pyridaben, Pyrimidifen (SU-8801), RH-0345, RH-2485, RYI-210, S-1283, S-1833, SB7242, SI-8601, Silafluofen, Silomadine (CG-177), SU-9118, Tebufenpyrad (MK-239), Teflubenzuron, Tetradifon, Tetrasul, Thiacloprid, Thiocyclam, TI-435, Tolfenpyrad (OMI-88), Triflumuron, Verbutin, Vertalec (Mykotal), YI-5301,

Der Wirkstoffgehalt der aus den handelsüblichen Formulierungen bereiteten Anwendungsformen kann von 0,00000001 bis zu 95 Gew.%, vorzugsweise zwischen 0,00001 und 1 Gew.%, Wirkstoff liegen.

Durch die synergistischen Effekte mit den Bt-Baumwollpflanzen und untereinander können insbesondere Mischungen der erfindungsgemäßen eingesetzten Wirkstoffen in höher verdünnten Formulierungen verwendet werden.

Beispielsweise enthalten entsprechend Formulierungen von Mischungen aus Pyrethroiden und Organophosphorverbindungen vorzugsweise 0,05 bis 0,01 Gew.-% Pyrethroid und 0,25 bis 0,20 Gew.-% Organophosphorverbindung, besonders bevorzugt 0,01 bis 0,001 Gew.-% Pyrethroid und 0,2 bis 0,1 Gew.-% Organophosphorverbindung.

Die erfindungsgemäß verwendeten Wirkstoffe Wirkstoffe können in ihren handelsüblichen Formulierungen auch in Kombination mit weiteren, literaturbekannten Fungiziden angewendet werden.

Als literaturbekannte Fungizide, sind z. B. folgende Produkte zu nennen:
Aldimorph, Andoprim, Anilazine, Azoxystrobin, Azaconazole, BAS 450F, Benalaxyl, Benodanil, Benomyl, Bethoxazin, Binapacryl, Bion (CGA-245704), Bitertanol, Bromuconazole, Buthiobate, Captafol, Captan, Carbendazim, Carboxin, Carpropamide, CGA 173506, Cymoxanil, Cyproconazole, Cyprodinil, Cyprofuram, Diflumetorim, Dichlofluanid, Dichlomezin, Diclobutrazol, Diclocymet (S-2900), Diclomezine, Diethofencarb, Difenconazol (CGA 169374), Difluconazole, Dimethirimol, Dimethomorph, Diniconazole, Dinocap, Dithianon, Dodemorph, Dodine, Edifenfos, Epoxiconazole, Ethirimol, Etridiazol, Famoxadone, (DPX-JE874), Fenarimol, Fenazaquin, Fenbuconazole, Fenfuram, Fenhexamid, Fenpiclonil, Fenpropidin, Fenpropimorph, Fentinacetate, Fentinhydroxide, Ferimzone (TF164), Fluazinam, Fluobenzimine, Fludioxonil, Flumetover (RPA-403397), Fluquinconazole, Fluorimide, Flusilazole, Flusulfamide, Flutolanil, Flutriafol, Folpet, Fosetylaluminium, Fuberidazole, Furalaxyl, Furconazol, Furametpyr (S-82658), Furmecyclox, Guazatine, Hexaconazole, Imazalil, Imibenconazole, lpconazole, lprobenfos, lprodione, Isoprothiolane, KNF 317, Kresoxim-methyl (BAS-490F), Kupferverbindungen wie Cu-oxychlorid, Oxine-Cu, Cu-oxide, Mancozeb, Maneb, Mepanipyrim (KIF 3535), Mepronil, Metalaxyl, Metalaxyl-M (CGA-329351), Metconazole, Methasulfocarb, Methfuroxam, Metominofen (SSF-126), Metominostrobin (Fenominostrobin, SSF-126), MON 24000, MON-6550, MON-41100, Myclobutanil, Nabam, Nitrothalidopropyl, Nuarimol, Ofurace, OK-9601, OK-9603, Oxadixyl, Oxycarboxin, Paclobutrazol, Penconazol, Pencycuron, PP 969, Polyoxins, Probenazole, Propineb, Prochloraz, Procymidon, Propamocarb, Propiconazol, Prothiocarb, Pyracarbolid, Pyrazophos, Pyrifenox, Pyrimethanil, Pyroquilon, Quinoxyfen (DE-795), Rabenzazole, RH-7592, RH-7281, Schwefel, Spiroxamine, SSF-109, Tebuconazole, Tetraconazole, TTF 167, Thiabendazole, Thicyofen, Thifluzamide (RH-130753), Thiofanatemethyl, Thiram, TM-402, Tolclofos-methyl, Tolylfluanid, Triadimefon, Triadimenol, Triazoxide, Trichoderma harzianum(DHF-471), Tricyclazole, Tridemorph, Triflumizol, Triforine, Triflumizole (UCC-A815), Triticonazole, Uniconazole, Validamycin, Vinchlozolin, XRD 563, Zineb, Natriumdodecylsulfonate, Natrium-dodecyl-sulfat, Natrium-C13/C15-alkohol-ethersulfonat, Natrium-cetostearyl-phosphatester, Dioctyl-natrium-sulfosuccinat, Natrium-isopropyl-naphthalenesulfonat, Natrium-methylenebisnaphthalene-sulfonat, Cetyl-trimethyl-ammoniumchlorid, Salze von langkettigen primären, sekundären oder tertiären Aminen, Alkyl-propyleneamine, Lauryl-pyrimidiniumbromid, ethoxylierte quarternierte Fettamine, Alkyl-dimethyl-benzyl-ammoniumchlorid und 1-Hydroxyethyl-2-alkyl-imidazolin.

Die oben genannten Kombinationspartner stellen bekannte Wirkstoffe dar, die zum großen Teil in C.D.S. Tomlin, S.B. Walker, The Pesticide Manual, 11. Auflage (1997), British Crop Protection Council, beschrieben sind.

Der Wirkstoffgehalt der aus den handelsüblichen Formulierungen bereiteten Anwendungsformen kann in weiten Bereichen variieren, die Wirkstoffkonzentration der Anwendungsformen kann von 0,0001 bis zu 95 Gew.-% Wirkstoff, vorzugsweise zwischen 0,0001 und 1 Gew.-% liegen. Beispielsweise enthalten solche Mischungen 0,05 bis 0,01 Gew.-% eines Pyrethroids und 0,5 bis 2 Gew.-% eines Fungizids, wie Pyrazofos oder Prochloraz. Die Anwendung geschieht in einer den Anwendungsformen angepaßten üblichen Weise.

Der Wirkstoffgehalt der aus den handelsüblichen Formulierungen bereiteten Anwendungsformen kann von 0,00000001 bis zu 95 Gew.-% Wirkstoff, vorzugsweise zwischen 0,00001 und 1 Gew.-% liegen.

In einer bevorzugten Variante des erfindungsgemäßen Verfahrens werden insektizid wirksame Verbindung und ein Fungizid gemeinsam aufgebracht.

Die Anwendung geschieht in einer den Anwendungsformen angepaßten üblichen Weise.

Das erfindungsgemäße Verfahren eignet sich bevorzugt zur Anwendung im ersten (L1) Larvenstadium, ebenso bevorzugt ist aber auch die Anwendung in älteren (L2 und/oder L3) Larvenstadien und/oder bei adulten Insekten, insbesondere bei der Bekämpfung von Lepidopteren.

Unter dem Begriff "Bt-Baumwolle" sind im Sinne der Erfindung Baumwollpflanzen bzw. -kulturen zu verstehen, die genetisch dahingehend modifiziert sind, daß sie ein oder mehrere Gene aus Bacillus thuringiensis, die für Kristallproteine aus der Cry-Familie codieren, enthalten und exprimieren, siehe z.B. D.L. Prieto-Sansónor et al., J. Ind. Microbiol. & Biotechn. 1997, 19, 202 und 1997 BCPL Symposium Proceedings No. 68, 83-100).

Bevorzugt sind Gene kodierend für die Proteine Cry1Aa, Cry1Ad, Cry1Ab, Cry1Ae, Cry1Ac, Cry1Fa, Cry1Fb, Cry1Ga, Cry1Gb, Cry1Da, Cry1Db, Cry1Ha, Cry1Hb, Cry1Ca, Cry1Cb, Cry1Ea, Cry1Eb, Cry1Ja, Cry1Jb, Cry1Bb, Cry1Bc, Cry1Bd, Cry1 Ba, Cry1 Ka, Cry1Ia, Crylb, Cry7Aa, Cry7Ab, Cry9Ca, Cry9Da, Cry9Ba, Cry9Aa, Cry8Aa, Cry8Ba, Cry8Ca, Cry3Aa, Cry3Ca, Cry3Ba, Cry3Bb, Cry4Aa, Cry4Ba, Cry10Aa, Cry19Aa, Cry19Ba, Cry16Aa, Cry17Aa, Cry5Ab, Cry5Ba, Cry12Aa, Cry13Aa, Cry14Aa, Cry15Aa, Cry2Aa, Cry2Ab, Cry2Ac, Cry18Aa, Cry11Aa, Cry11Ba, Cyt1Aa, Cyt1Ab, Cyt1Ba, Cyt2Aa, Cyt2Ba, Cry6Aa, Cry6Ba.

Besonders bevorzugt sind Cry3Ca, CrylAb, Cry7Aa, Cry9C und CrylDa.

Ebenso besonders bevorzugt sind CryIAa, CrylAb, CrylAc, CrylB, CrylC, Cry2A, Cry3, Cry3A, Cry3C,Cry5 und Cry9C.

Ganz besonders bevorzugt sind die Subfamilien CryI und Cry9, insbesondere Cry IA, CrylC, CrylF, und Cry9C.

Weiterhin bevorzugt ist es, Pflanzen einzusetzen, die Gene für mehrere Bt-Proteine enthalten.

Die transgenen Kulturpflanzen können neben der Expression von Toxinen aus Bacillus thuringiensis (Bt) zur Insektenresistenz auch eine weitere transgene Eigenschaften aufweisen, z.B. weitere Insektenresistenzen (z.B. durch Expression eines Protease- bzw. Peptidase-Inhibitors, vgl. WO-A-95/35031), Herbizidresistenzen (z.B. gegen Glufosinate oder Glyphosate durch Expression des pat- oder bar-Gens) oder auch Nematoden-, Pilz- oder Virusresistenzen (z.B. durch Expression einer Glucanase, Chitinase) oder auch in ihren metabolischen Eigenschaften genetisch modifiziert sein, so daß eine qualitative und/oder quantitative Änderung von Inhaltsstoffen (z.B. durch Modifikationen des Energie-, Kohlenhydrat-, Fettsäure- oder Stickstoffwechsels oder diese beeinflussende Metabolitflüsse) resultiert. Bevorzugt sind beispielsweise Bt-Baumwollpflanzen, die zusätzlich eine Glufosinate- oder Glyphosate-Resistenz aufweisen.

Bt-Baumwolle ist bekannt und einschließlich Methoden zu ihrer Herstellung, ausführlich beschrieben in beispielsweise US-A-5,322,938; Prietro-Samsonör et al., J. Ind. Microbiol. & Biotechn. 1997, 19, 202, und H. Agaisse und D. Lereclus, J. Bacteriol. 1996, 177, 6027.

Bt-Baumwolle ist weiterhin in verschiedenen Variationen kommerziell erhätlich, beispielsweise unter den Namen NuCOTN^{®} von der Firma Deltapine (USA).

Bevorzugt für das erfindungsgemäße Verfahren sind folgende Typen von Bt-Baumwolle: NuCOTN33^{®} und NuCOTN33B^{®}.

Wege zur Herstellung transgener Pflanzen, die im Vergleich zu natürlich vorkommenden Pflanzen modifizierte Eigenschaften aufweisen, bestehen beispielsweise in der Anwendung gentechnischer Verfahren (siehe z.B. Willmitzer L., 1993, Transgenic plants. In: Biotechnology, A Multivolume Comprehensive Treatise, Rehm et al. (eds.) Vol.2, 627-659, VCH Weinheim, Germany; D`Halluin et al., 1992, Biotechnology 10, 309-314, McCormick et al. Plant Cell Reports,1986, 5, 81-84; EP-A-0221044 und EP-A-0131624).

Beschrieben ist beispielsweise die Herstellung von gentechnisch modifizierten Pflanzen in bezug auf Modifikationen des pflanzlichen Kohlenhydratstoffwechsels (z. B. WO 94/28146, WO 92/11376, WO 92/14827, WO 91/19806), Resistenzen gegen bestimmte Herbizide, z.B. vom Typ Glufosinate (vgl. z. B. EP-A-0242236, EP-A-242246) oder Glyphosate (z.B. WO 92/00377).

Zahlreiche molekularbiologische Techniken, mit denen neue transgene Pflanzen mit veränderten Eigenschaften hergestellt werden können, sind dem Fachmann bekannt; siehe z.B. Sambrook et al., 1989, Molecular Cloning, A Laboratory Manual, 2. Aufl. Cold Spring Harbor Laboratory Press, Cold Spring Harbor, NY; oder Winnacker, Gene und Klone, VCH Weinheim 2. Auflage 1996 oder Christou, Trends in Plant Science 1 (1996) 423-431).

Für derartige gentechnische Manipulationen können geeignete Nucleinsäuremoleküle z.B. mittels geeigneter Vektoren, die eine Mutagenese oder eine Sequenzveränderung durch Rekombination von DNA-Sequenzen erlauben, in Pflanzen oder pflanzliche Zellen eingebracht werden. Mit Hilfe der obengenannten Standardverfahren können z.B. auch Basenaustausche vorgenommen, Teilsequenzen entfernt oder natürliche oder synthetische Sequenzen hinzugefügt werden. Es können z.B. auch die natürlich vorkommenden Gene vollständig durch heterologe bzw. synthetische Gene vorzugsweise unter der Kontrolle eines in Pflanzenzellen aktiven Promoters ersetzt werden ("gene replacement"). Für die Verbindung der DNA-Fragmente untereinander können an die Fragmente Adaptoren oder Linker angesetzt werden.

Die Herstellung von Pflanzenzellen mit einer verringerten Aktivität eines Genprodukts kann beispielsweise erzielt werden durch die Expression mindestens einer entsprechenden antisense-RNA, einer sense-RNA zur Erzielung eines Cosuppressionseffektes oder die Expression mindestens eines entsprechend konstruierten Ribozyms, das spezifisch Transkripte des obengenannten Genprodukts spaltet.

Hierzu können zum einen DNA-Moleküle verwendet werden, die die gesamte codierende Sequenz eines Genprodukts einschließlich eventuell vorhandener flankierender Sequenzen umfassen, als auch DNA-Moleküle, die nur Teile der codierenden Sequenz umfassen, wobei diese Teile lang genug sein müssen, um in den Zellen einen antisense-Effekt zu bewirken. Möglich ist auch die Verwendung von DNA-Sequenzen, die einen hohen Grad an Homologie zu den codiereden Sequenzen eines Genprodukts aufweisen, aber nicht vollkommen identisch sind.

Bei der Expression von Nucleinsäuremolekülen in Pflanzen kann das synthetisierte Protein in jedem beliebigen Kompartiment der pflanzlichen Zelle lokalisiert sein. Um aber die Lokalisation in einem bestimmten Kompartiment zu erreichen, kann z. B. die codierende Region mit DNA-Sequenzen verknüpft werden, die die Lokalisierung in einem bestimmten Kompartiment oder zu einem bestimmten Zeitpunkt (zu einem bestimmten Stadium oder chemisch oder biologisch induziert) gewährleisten (z.B. Transit- oder Signalpeptide, zeit- oder ortsspezifische Promotoren). Derartige Sequenzen sind dem Fachmann bekannt (siehe beispielsweise Braun et al., EMBO J.11 (1992), 3219-3227; Wolter et al., Proc. Natl. Acad. Sci. USA 85 (1988), 846-850; Sonnewald et al., Plant J. 1 (1991), 95-106).

Transgene Pflanzenzellen können nach bekannten Techniken zu ganzen Pflanzen regeneriert werden.

Auf diese Weise sind transgene Pflanzen erhältlich, die veränderte Eigenschaften durch Überexpression, Suppression oder Inhibierung homologer (d.h. endogener) Gene oder Gensequenzen oder Expression heterologer (d.h. exogener) Gene oder Gensequenzen aufweisen.

Das erfindungsgemäße Verfahren eignet sich zur Bekämpfung einer Vielzahl von Schadorganismen, die insbesondere in Baumwolle auftreten, insbesondere Insekten, Spinnentieren und Helminthen, ganz besonders bevorzugt Insekten und Spinnentieren. Zu den erwähnten Schädlingen gehören:
Aus der Ordnung der Acarina z.B. Acarus siro, Argas spp., Ornithodoros spp., Dermanyssus gallinae, Eriophyes ribis, Phyllocoptruta oleivora, Boophilus spp., Rhipicephalus spp., Amblyomma spp., Hyalomma spp., lxodes spp., Psoroptes spp., Chorioptes spp., Sarcoptes spp., Tarsonemus spp., Bryobia praetiosa, Panonychus spp., Tetranychus spp., Eotetranychus spp., Oligonychus spp., Eutetranychus spp.. Aus der Ordnung der lsopoda z.B. Oniscus asselus, Armadium vulgar, Porcellio scaber.
Aus der Ordnung der Diplopoda z.B. Blaniulus guttulatus.
Aus der Ordnung der Chilopoda z.B. Geophilus carpophagus, Scutigera spp..
Aus der Ordnung der Symphyla z.B. Scutigerella immaculata.
Aus der Ordnung der Thysanura z.B. Lepisma saccharina.
Aus der Ordnung der Collembola z.B. Onychiurus armatus.
Aus der Ordnung der Orthoptera z.B. Blatta orientalis, Periplaneta americana, Leucophaea madeirae, Blattella germanica, Acheta domesticus, Gryllotalpa spp., Locusta migratoria migratorioides, Melanoplus differentialis, Schistocerca gregaria. Aus der Ordnung des Isoptera z.B. Reticulitermes spp..
Aus der Ordnung der Anoplura z.B. Phylloera vastatrix, Pemphigus spp., Pediculus humanus corporis, Haematopinus spp., Linognathus spp..
Aus der Ordnung der Mallophaga z. B. Trichodectes pp., Damalinea spp..
Aus der Ordnung der Thysanoptera z.B. Hercinothrips femoralis, Thrips tabaci.
Aus der Ordnung der Heteroptera z.B. Eurygaster spp., Dysdercus intermedius, Piesma quadrata, Cimex lectularius, Rhodnius prolixus, Triatoma spp..
Aus der Ordnung der Homoptera z.B. Aleurodes brassicae, Bemisia tabaci, Trialeurodes vaporariorum, Aphis gossypii, Brevicoryne brassicae, Cryptomyzus ribis, Doralis fabae, Doralis pomi, Eriosoma lanigerum, Hyalopterus arundinis, Macrosiphum avenae, Myzus spp., Phorodon humuli, Rhopalosiphum padi, Empoasca spp., Euscelus bilobatus, Nephotettix cincticeps, Lecanium corni, Saissetia oleae, Laodelphax striatellus, Nilaparvata lugens, Aonidiella aurantii, Aspidiotus hederae, Pseudococcus spp., Psylla spp..
Aus der Ordnung der Lepidoptera z.B. Pectinophora gossypiella, Bupalus piniarius, Cheimatobia brumata, Lithocolletis blancardella, Hyponomeuta padella, Plutella maculipennis, Malacosoma neustria, Euproctis chrysorrhoea, Lymantria spp., Bucculatrix thurberiella, Phyllocnistis citrella, Agrotis spp., Euxoa spp., Feltia spp., Earias insulana, Heliothis spp., Laphygma exigua, Mamestra brassicae, Panolis flammea, Prodenia litura, Spodoptera spp., Trichoplusia ni, Carpocapsa pomonella, Pieris spp., Chilo spp., Pyrausta nubilalis, Ephestia kuehniella, Galleria mellonella, Cacoecia podana, Capua reticulana, Choristoneura fumiferana, Clysia ambiguella, Homona magnanima, Tortrix viridana.

Aus der Ordnung der Coleoptera z.B. Anobium punctatum, Rhizopertha dominica, Bruchidius obtectus, Acanthoscelides obtectus, Hylotrupes bajulus, Agelastica alni, Leptinotarsa decemlineata, Phaedon cochleariae, Diabrotica spp., Psylloides chrysocephala, Epilachna varivestis, Atomaria spp., Oryzaephilus surinamensis, Anthonomus spp., Sitophilus spp., Otiorrhynchus sulcatus, Cosmopolites sordidus, Ceuthorrynchus assimilis, Hypera postica, Dermestes spp., Trogoderma, Anthrenus spp., Attagenus spp., Lyctus spp., Meligethes aeneus, Ptinus spp., Niptus hololeucus, Gibbium psylloides, Tribolium spp., Tenebrio molitor, Agriotes spp., Conoderus spp., Melolontha melolontha, Amphimallon solstitialis, Costelytra zealandica.
Aus der Ordnung der Hymenoptera z.B. Diprion spp., Hoplocampa spp., Lasius spp., Monomorium pharaonis, Vespa spp..
Aus der Ordnung der Diptera z.B. Aedes spp., Anopheles spp., Culex spp., Drosophila melanogaster, Musca spp., Fannia spp., Calliphora erythrocephala, Lucilia spp., Chrysomyia spp., Cuterebra spp., Gastrophilus spp., Hypobosca spp., Stomoxys spp., Oestrus spp., Hypoderma spp., Tabanus spp., Tannia spp., Bibio hortulanus, Oscinella frit, Phorbia spp., Pegomyia hyoscyami, Ceratitis capitata, Dacus oleae, Tipula paludosa.
Aus der Ordnung der Siphonaptera z. B. Xenopsylla cheopsis, Ceratophyllus spp.. Aus der Ordnung der Arachnida z. B. Scorpio maurus, Latrodectus mactans.
Aus der Klasse der Helminthen z.B. Haemonchus, Trichostrongulus, Ostertagia, Cooperia, Chabertia, Strongyloides, Oesophagostomum, Hyostrongulus, Ancylostoma, Ascaris und Heterakis sowie Fasciola.

Bevorzugt eignet sich das erfindungsgemäße Verfahren zur Bekämpfung von Insekten aus den Ordnungen Homoptera vorzugsweise Bemisia tabaci, Trialeurodes vaporariorum, Aphis gossypii, Myzus spp., Lepidoptera, vorzugsweise Agrotis spp., Heliothis spp., Mamestra brassicae, Prodinia Litura, Spodoptera spp., Trichoplusia ni, und Coleoptera, vorzugsweise Anthonomus spp.

Besonders bevorzugt eignet sich das erfindungsgemäße Verfahren zur Bekämpfung von Insekten aus der Klasse Lepidoptera, besonders bevorzugt von Spodoptera, Agrotis, Heliothis, ganz besonders bevorzugt von Spodoptera littoralis, Agrotis segetum und Heliothis virescens.

Überraschenderweise eignet sich das Verfahren auch zur Bekämpfung von Schadorganismen, die Resistenzen gegen einzelne Insektizidklassen, wie Pyrethroide, Organophosphorverbindungen oder Bt, aufweisen.

Die Erfindung wird durch das Beispiel näher erläutert.

Auf den Inhalt der deutschen Patentanmeldung 198 25 333.8, deren Priorität die vorliegende Anmeldung beansprucht, sowie auf den Inhalt der beiliegenden Zusammenfassung wird hiermit ausdrücklich Bezug genommen; sie gelten durch Zitat als Bestandteil dieser Beschreibung.

### Beispiel

### Spodoptera littoralis

Drei Monate alte Baumwollpflanzen (gewöhnliche Baumwolle, Vulkano) und Bt-Baumwolle (NuCOTN 33B^{®}) wurden mit Hilfe eines Tracksprayers (200 I/ha) mit dem zu testenden Insektizid besprüht. Nach dem Trocknen wurden Pflanzen mit 10 (L3) Larven von Spodoptera littoralis infiziert.
Nach 2, 4 und 7 Tagen wurden Fraßschaden und Mortalität bonitiert.
Testbedingungen: Gewächshaus, 23°C, 60% Luftfeuchtigkeit

| | | 2d | | | | 4d | | | | 7d | | | |
|---|---|---|---|---|---|---|---|---|---|---|---|---|---|
| | | Fraßschaden / Mortalität | | | | Fraßschaden / Mortalität | | | | Fraßschaden / Mortalität | | | |
| Verbindung Wrkstoffe/ha | | Baumwolle | | B.t.- Baumwolle | | Baumwolle | | B.t.-Baumwolle | | Baumwolle | | B.t.-Baumwolle | |
| | | | | | | | | | | | | | |
| Kontrolle 1 | | 8 | 10 | 8 | 0 | 15 | 10 | 12 | 0 | 20 | 10 | 35 | 0 |
| Kontrolle 2 | | 10 | 20 | 10 | 0 | 12 | 20 | 15 | 0 | 20 | 20 | 50 | 0 |
| Kontrolle 3 | | 6 | 20 | 10 | 0 | 15 | 20 | 10 | 0 | 20 | 20 | 45 | 0 |
| | | | | | | | | | | | | | |
| Hostathion (Triazophos) | | | | | | | | | | | | | |
| EC 40 | 125 | 3 | 100 | 1 | 100 | 3 | 100 | 1 | 100 | 3 | 100 | 1 | 100 |
| | 42 | 8 | 20 | 2 | 40 | 10 | 30 | 2 | 60 | 15 | 30 | 2 | 100 |
| | 14 | 5 | 10 | 3 | 40 | 10 | 20 | 5 | 40 | 15 | 20 | 15 | 50 |
| | 5 | 5 | 40 | 7 | 10 | 6 | 40 | 8 | 20 | 10 | 40 | 25 | 20 |
| | 1.5 | 5 | 30 | 6 | 0 | 8 | 30 | 10 | 0 | 20 | 30 | 25 | 0 |
| | | | | | | | | | | | | | |

Ein synergistischer Effekt ist deutlich erkennbar.

## Patentansprüche

1. Verfahren zur Bekämpfung von Schadorganismen in gentechnisch veränderten Baumwollpflanzen, die ein aus Bacillus thuringiensis abgeleitetes Gen enthalten, welches für ein insektizid wirksames Protein codiert und dieses exprimiert, **dadurch gekennzeichnet, daß** man eine insektizid wirksame Menge in einer Aufwandmenge von 0,001 bis 0,3 kg/ha von einer oder mehreren Verbindungen aus der folgenden Gruppe a) auf die Pflanzen, deren Saat- oder Vermehrungsgut und/oder deren Anbaufläche aufbringt:
a) Organoposphorverbindungen:
Triazophos (726), Monocrotophos (502), Methamidophos (479), Chlorpyrifos (137), Parathion (551), Acephate (4), Profenofos (594), Malathion (448), Heptenphos (395);

2. Verfahren nach Anspruch 1, **dadurch gekennzeichnet, daß** man eine Verbindung aus der Gruppe Triazophos, Monocrotophos und Malathion verwendet.

3. Verfahren nach einem oder mehreren der Ansprüche 1 und 2, **dadurch gekennzeichnet, daß** man eine Mischung aus zwei oder mehr der insektizid wirksamen Verbindungen einsetzt.

4. Verfahren nach einem oder mehreren der Ansprüche 1 bis 3, **dadurch gekennzeichnet, daß** man insektizid wirksame Verbindung als eine 0,00001 bis 1 gew.-%ige Formulierung einsetzt.

5. Verfahren nach einem oder mehreren der Ansprüche 1 bis 4, **dadurch gekennzeichnet, daß** das insektizid wirksame Bt-Protein in der Baumwollpflanze ein Kristallprotein aus der Subfamilie CryI oder IX ist.

6. Verfahren nach einem oder mehreren der Ansprüche 1 bis 5, **dadurch gekennzeichnet, daß** man Baumwollpflanzen verwendet, die eine Glufosinate- oder Glyphosat-Resistenz aufweisen.

7. Verfahren nach einem oder mehreren der Ansprüche 1 bis 5, **dadurch gekennzeichnet, daß** die Schadorganismen Insekten sind, die zu den Ordnungen Homoptera, Lepidoptera und/oder Coleptera gehören.

8. Verfahren nach einem oder mehreren der Ansprüche 1 bis 7, **dadurch gekennzeichnet, daß** man die insektizid wirksame Verbindung gegen Larven im L1-Stadium einsetzt.

9. Verfahren nach einem oder mehreren der Ansprüche 1 bis 7, **dadurch gekennzeichnet, daß** man die insektizid wirksame Verbindung gegen Larven im L2 und/oder L3 Stadium und/oder gegen adulte Tiere einsetzt.

10. Verfahren nach einem oder mehreren der Ansprüche 1 bis 9, **dadurch gekennzeichnet, daß** man neben einen oder mehreren insektizid wirksamen Verbindungen aus der Gruppe a), eine oder mehrere weitere insektizid, fungizid oder herbizid wirksame Verbindungen einsetzt.

11. Verfahren nach Anspruch 5, **dadurch gekennzeichnet, daß** das insektizid wirksame Protein in der Baumwollpflanze Cry3Ca, CrylAb, Cry7Aa, Cry9C und CrylDa ist.

12. Verfahren nach Anspruch 5, **dadurch gekennzeichnet, daß** das insektizid wirksame Protein in der Baumwollpflanze CryIAa, CrylAb, CrylAc, CrylB, CryIC, Cry2A, Cry3, Cry3A, Cry3C, Cry5,Cry9C ist.

13. Verwendung von Verbindungen aus der Gruppe a)
a) Organophosphorverbindungen:
Triazophos (726), Monocrotophos (502), Malathion (448);
zur Bekämpfung von Schadorganismen in gentechnisch veränderten Baumwollpflanzen, die ein aus Bacillus thuringiensis abgeleitetes Gen enthalten, welches für ein insektizid wirksames Protein codiert und dieses exprimiert.

## Claims

1. A method for controlling harmful organisms in genetically modified cotton plants which comprise a gene derived from Bacillus thuringiensis which encodes and expresses an insecticidally active protein, which comprises applying an insecticidally effective amount at an application rate of from 0.001 to 0.3 kg/ha of one or more compounds from the following group a) to the plants, to their seeds or propagation stock and/or to the area in which they are cultivated:
a) Organophosphorus compounds:
triazophos (726), monocrotophos (502), methamidophos (479), chlorpyrifos (137), parathion (551), acephate (4), profenofos (594), malathion (448), heptenophos (395).

2. The method according to claim 1, wherein a compound from the group consisting of triazophos, monocrotophos and malathion is used.

3. The method according to one or more of claims 1 and 2, wherein a mixture of two or more of the insecticidally active compounds is used.

4. The method according to one or more of claims 1 to 3, wherein the insecticidally active compound is employed as a from 0.00001 to 1% by weight strength formulation.

5. The method according to one or more of claims 1 to 4, wherein the insecticidally active Bt-protein in the cotton plant is a crystal protein from the subfamily CryI or IX.

6. The method according to one or more of claims 1 to 5, wherein cotton plants are used which are glufosinate- or glyphosate-resistant.

7. The method according to one or more of claims 1 to 5, wherein the harmful organisms are insects which belong to the orders Homoptera, Lepidoptera and/or Coleoptera.

8. The method according to one or more of claims 1 to 7, wherein the insecticidally active compound is used against larvae in the L1 stage.

9. The method according to one or more of claims 1 to 7, wherein the insecticidally active compound is used against larvae in the L2 and/or L3 stage and/or against adult animals.

10. The method according to one or more of claims 1 to 9, wherein, in addition to one or more insecticidally active compounds from the group a), one or more other insecticidally, fungicidally or herbicidally active compounds are employed.

11. The method according to claim 5, wherein the insecticidally active protein in the cotton plant is Cry3Ca, CryIAb, Cry7Aa, Cry9C and CryIDa.

12. The method according to claim 5, wherein the insecticidally active protein in the cotton plant is CryIAa, CryIAb, CryIAc, CryIB, CryIC, Cry2A, Cry3, Cry3A, Cry3C, Cry5,Cry9C.

13. The use of compounds from the group a)
a) organophosphorus compounds:
triazophos (726), monocrotophos (502), malathion (448) ;
for controlling harmful organisms in genetically modified cotton plants which comprise a gene derived from Bacillus thuringiensis which encodes and expresses an insecticidally active protein.

## Revendications

1. Procédé pour lutter contre des organismes nuisibles chez des plants de coton génétiquement modifiés qui contiennent un gène issu de *Bacillus thuringiensis,* qui code pour une protéine à activité insecticide, **caractérisé en ce que** qu'on applique sur les plantes, leurs semences ou leur matériel de propagation et/ou sur leur aire de culture une quantité à activité insecticide à une dose d'emploi de 0,001 à 0,3 kg/ha d'un ou plusieurs composés choisis dans le groupe a) suivant :
a) composés organophosphorés :
triazophos (726), monocrotophos (502), méthamidophos (479), chlorpyrifos (137), parathion (551), acéphate (4), profénofos (594), malathion (448), heptenphos (395).

2. Procédé selon la revendication 1, **caractérisé en ce qu'**on utilise un composé choisi dans le groupe constitué par le triazophos, le monocrotophos et le malathion.

3. Procédé selon une ou plusieurs des revendications 1 et 2, **caractérisé en ce qu'**on utilise un mélange de deux ou plus de deux des composés à activité insecticide.

4. Procédé selon une ou plusieurs des revendications 1 à 3, **caractérisé en ce qu'**on utilise le composé à activité insecticide sous forme d'une composition à 0,00001 - 1 % en poids.

5. Procédé selon une ou plusieurs des revendications 1 à 4, **caractérisé en ce que** la protéine Bt à activité insecticide dans le plant de coton est une protéine cristalline de la sous-famille CryI ou IX.

6. Procédé selon une ou plusieurs des revendications 1 à 5, **caractérisé en ce qu'**on utilise des plants de coton qui présentent une résistance au glufosinate ou au glyphosate.

7. Procédé selon une ou plusieurs des revendications 1 à 5, **caractérisé en ce que** les organismes nuisibles sont des insectes qui appartiennent aux ordres de homoptères, des lépidoptères et/ou des coléoptères.

8. Procédé selon une ou plusieurs des revendications 1 à 7, **caractérisé en ce qu'**on utilise le composé à activité insecticide contre des larves au stade L1.

9. Procédé selon une ou plusieurs des revendications 1 à 7, **caractérisé en ce qu'**on utilise le composé à activité insecticide contre des larves au stade L1 et/ou au stade L3 et/ou contre des animaux adultes.

10. Procédé selon une ou plusieurs des revendications 1 à 9, **caractérisé en ce qu'**en plus d'un ou plusieurs composés à activité insecticide du groupe a), on utilise un ou plusieurs autres composés à activité insecticide, fongicide ou herbicide.

11. Procédé selon la revendication 5, **caractérisé en ce que** la protéine à activité insecticide chez le plant de coton est Cry3Ca, CryIAb, Cry7Aa, Cry9C et CryIDa.

12. Procédé selon la revendication 5, **caractérisé en ce que** la protéine à activité insecticide chez le plant de coton est CryIAa, CryIAb, CryIAc, CryIB, CryIC, Cry2A, Cry3, Cry3A, Cry3C, Cry5, Cry9C.

13. Utilisation de composés choisis dans le groupe a)
a) composés organophosphorés :
triazophos (726), monocrotophos (502), malathion (448)
pour lutter contre des organismes nuisibles chez des plants de coton génétiquement modifiés qui contiennent un gène issu de *Bacillus thuringiensis,* qui code pour une protéine à activité insecticide et l'exprime.
